# EUROPEAN PATENT APPLICATION

(11) **EP 3 964 454 A1**
(43) Date of publication of application: **09.03.2022**
(21) Application number: 21192597.9
(22) Date of filing: 23.08.2021
(51) Int. Cl.: B65D 77/20

(54) **COMPOSITE SEALING FILM AND BEVERAGE CUP USING THE SAME**

(30) Priority: 03.09.2020 TW 109211553 U
(71) Applicant: Chien, Tsu-Hsi, New Taipei City 239 (TW)
(72) Inventor: Chien, Tsu-Hsi, New Taipei City 239 (TW)
(74) Representative: Strehl Schübel-Hopf & Partner

(57) **Abstract**

A composite sealing film, which includes: a layer of base film for being heat sealed onto a periphery of an opening of a beverage cup, the layer of base film having a through hole at a position thereon for being adjacent to the periphery of the opening of the beverage cup, where the layer of base film includes a stacked structure of at least a sealing layer and a surface layer; and a covering sheet, which is re-adherable by having an adhesive on a bottom surface thereof and has one end fastened to the layer of base film on one side of the through hole, whereby the covering sheet can be repeatedly opened and adhered to the layer of base film to enable a user to expose the through hole or close the through hole according to the user's need.

## Description

### BACKGROUND OF THE INVENTION

### Field of the Invention

The present invention is related to the sealing film, especially to a sealing film structure for beverage cup.

### Description of the Related Art

Nowadays, beverage shops generally have a beverage sealing machine in the store to seal the cups containing beverages, or provide a cup lid to cover the cup to facilitate the cups containing beverages to be carried by consumers.

However, general sealing films have a common problem of being not easy to be punctured through by an environmentally friendly straw.

To solve the aforementioned problems, a novel sealing film structure is needed.

### SUMMARY OF THE INVENTION

The main objective of the invention is to propose a composite sealing film, which has a re-adherable sheet for covering a through hole of a layer of base film to allow a user to expose the through hole or close the through hole at user's convenience, thereby enabling the user to put an environmentally friendly straw into a beverage cup, or directly place the mouth over the through hole to drink a beverage, and allowing the user to seal the through hole with the re-adherable sheet after pulling out the environmentally friendly straw to prevent the beverage from overflowing the beverage cup. Moreover, the novel composite sealing film of the present invention is proposed to replace a plastic cup lid and eliminate the need of using one-time straws to reduce plastic usage, thereby contributing greatly to environmental protection.

To attain the foregoing objective, a composite sealing film is proposed, which includes:
a layer of base film for being heat sealed onto a periphery of an opening of a beverage cup, the layer of base film having a through hole at a position thereon for being adjacent to the periphery of the opening of the beverage cup, where the layer of base film includes a stacked structure of a sealing layer and a surface layer, or a stacked structure of a sealing layer, a heat-insulating layer and a surface layer; and
a covering sheet, which is re-adherable by having an adhesive on a bottom surface thereof and has one end fastened to the layer of base film on one side of the through hole, whereby the covering sheet can be repeatedly opened and adhered to the layer of base film to enable a user to expose the through hole or close the through hole according to the user's need.

In one embodiment, the layer of base film is printed with a pattern.

In one embodiment, the covering sheet has an oblong shape.

In one embodiment, the covering sheet has a triangular shape.

In one embodiment, the covering sheet has a water-drop shape.

To attain the aforementioned objective, the invention further proposes a beverage cup, which has a cup body and a sealing film, and the sealing film is characterized to include:
a layer of base film being heat sealed onto a periphery of an opening of the cup body, the layer of base film having a through hole adjacent to the periphery of the opening of the cup body, where the layer of base film includes a stacked structure of a sealing layer and a surface layer, or a stacked structure of a sealing layer, a heat-insulating layer and a surface layer; and
a covering sheet, which is re-adherable by having an adhesive on a bottom surface thereof and has one end fastened to the layer of base film on one side of the through hole, whereby the covering sheet can be repeatedly opened and adhered to the layer of base film to enable a user to expose the through hole or close the through hole according to the user's need.

In one embodiment, the layer of base film is printed with a pattern.

In one embodiment, the covering sheet has an oblong shape.

In one embodiment, the covering sheet has a triangular shape.

In one embodiment, the covering sheet has a water-drop shape.

To make it easier for our examiner to understand the objective of the invention, its structure, innovative features, and performance, we use preferred embodiments together with the accompanying drawings for the detailed description of the invention.

### BRIEF DESCRIPTION OF THE DRAWINGS

Figure 1 illustrates an exploded schematic diagram of an embodiment of the composite sealing film of the invention.
Figure 2 illustrates a schematic diagram of a plurality of composite sealing films formed in a continuous strip.
Figure 3 illustrates a schematic diagram of an embodiment of the beverage cup of the invention.
Figure 4 illustrates a user putting a straw into a through hole after the user has opened an oblong re-adherable covering sheet of the beverage cup shown in Figure 3.

### DETAILED DESCRIPTION OF THE PREFERRED EMBODIMENTS

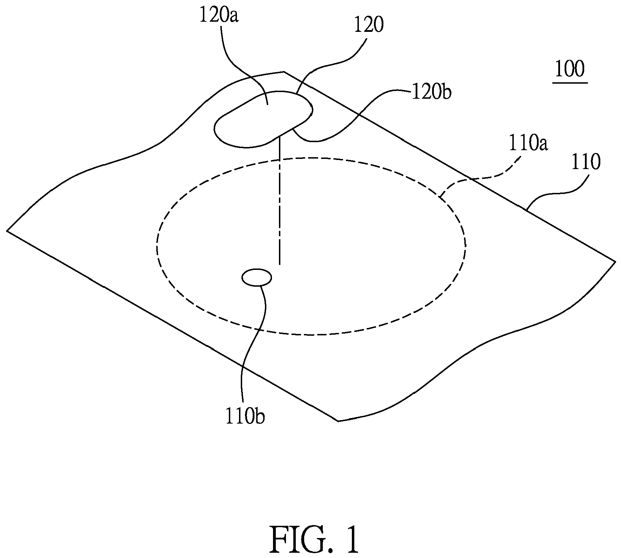

Please refer to Figure 1, which illustrates an exploded schematic diagram of an embodiment of the composite sealing film of the invention. As shown in Figure 1, a composite sealing film 100 has a layer of base film 110 and a covering sheet 120 that is re-adherable.

The layer of base film 110 has a central region, of which a periphery 110a is used to be heat sealed onto a periphery of an opening of a beverage cup, and the layer of base film 110 has a through hole at a position thereon for being adjacent to the periphery of the opening of the beverage cup, where the layer of base film 110 includes a stacked structure of a sealing layer and a surface layer, or a stacked structure of a sealing layer, a heat-insulating layer and a surface layer. The sealing layer, the heat-insulating layer and the surface layer are all implemented by plastics, where the sealing layer is a thermoplastic layer; the heat-insulating layer is a heat-insulating plastic layer; and the surface layer is a transparent plastic layer. When the layer of base film 110 is heat sealed onto the periphery of an opening of a beverage cup, the stacked structure is oriented to have the sealing layer positioned at the bottom of the stacked structure, the heat-insulating layer positioned at the middle of the stacked structure, and the surface layer positioned at the top of the stacked structure. Besides, for possible embodiments, the surface layer can further have characters and/or a pattern printed on a bottom surface thereof.

The covering sheet 120 has a top surface 120a and a bottom surface 120b, where the bottom surface 120b is disposed with an adhesive and the covering sheet 120 has one end fastened to the base film 110 on one side of the through hole 110b, whereby the covering sheet 120 can be repeatedly opened and adhered to the layer of base film 110 to enable a user to expose the through hole 110b or close the through hole 110b according to the user's need.

In addition, in a possible embodiment, the layer of base film 110 is printed with a pattern.

In addition, for possible embodiments, the covering sheet 120 can be of an oblong shape, a triangle shape, or a water-drop shape to facilitate the user's operations.

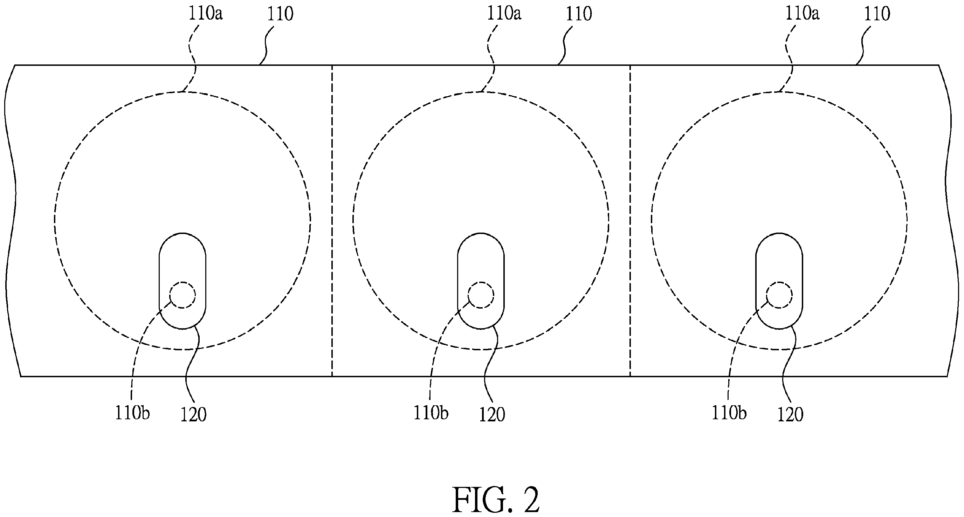

In addition, the composite sealing film 100 can be formed in a continuous strip to facilitate sealing operations on cups containing a beverage performed by a beverage sealing machine. Please refer to figure 2, which illustrates a schematic diagram of a plurality of composite sealing films formed in a continuous strip.

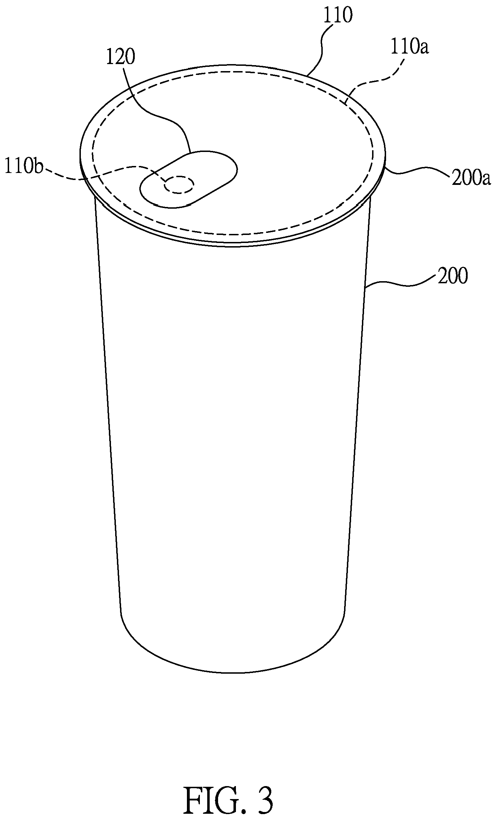

Based on the above description, the invention further proposes a beverage cup. Please refer to figure 3, which illustrates a schematic diagram of an embodiment of the beverage cup of the invention. As shown in figure 3, the beverage cup has a cup body 200 and a sealing film, where the sealing film has a layer of base film 110 and a covering sheet 120 that is re-adherable.

The layer of base film 110, which can be printed with a pattern, has a periphery 110a being heat sealed onto an opening periphery 200a of the cup body 200, and has a through hole 110b near the periphery 110a, where the layer of base film 110 includes a stacked structure of a sealing layer and a surface layer, or a stacked structure of a sealing layer, a heat-insulating layer and a surface layer. The sealing layer, the heat-insulating layer and the surface layer are all implemented by plastics, where the sealing layer is a thermoplastic layer; the heat-insulating layer is a heat-insulating plastic layer; and the surface layer is a transparent plastic layer. When the layer of base film 110 is heat sealed onto the periphery of an opening of a beverage cup, the stacked structure is oriented to have the sealing layer positioned at the bottom of the stacked structure, the heat-insulating layer positioned at the middle of the stacked structure, and the surface layer positioned at the top of the stacked structure. Besides, the pattern can be printed on a bottom surface of the surface layer.

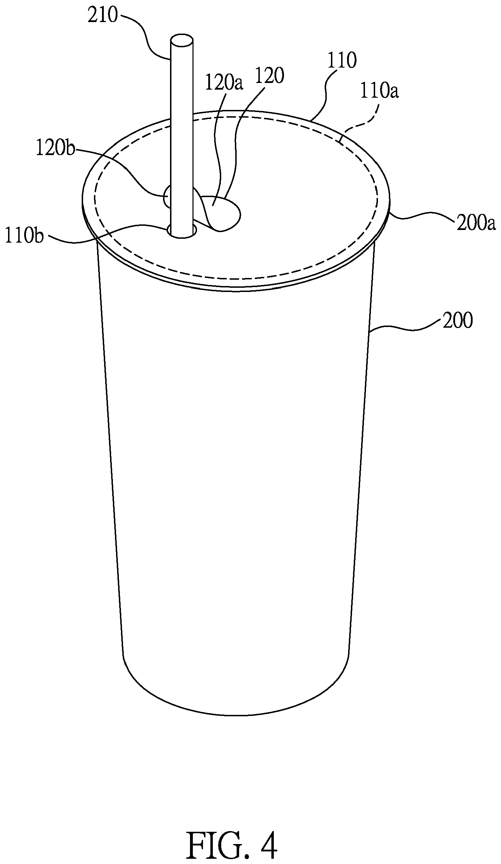

The covering sheet 120 has a top surface 120a and a bottom surface 120b, where the bottom surface 120b is disposed with an adhesive and the covering sheet 120 has one end fastened to the base film 110 on one side of the through hole 110b, whereby the covering sheet 120 can be repeatedly opened and adhered to the layer of base film 110 to enable a user to expose the through hole 110b or close the through hole 110b according to the user's need. For possible embodiments, the covering sheet 120 can be of an oblong shape, a triangle shape, or a water-drop shape to facilitate the user's operations. Please refer to figure 4, which illustrates a scenario that a user puts a straw 210 into the through hole 110b of the beverage cup shown in figure 3 after an oblong covering sheet 120 is opened.

Thanks to the designs disclosed above, the present invention has the following advantages:

The composite sealing film of the invention has a re-adherable sheet for covering a through hole of a layer of base film to allow a user to expose the through hole or close the through hole at user's convenience, thereby enabling the user to put an environmentally friendly straw into a beverage cup, or directly place the mouth over the through hole to drink a beverage, and allowing the user to seal the through hole with the re-adherable sheet after pulling out the environmentally friendly straw to prevent the beverage from overflowing the beverage cup. What is more, the present invention can use the novel composite sealing film to replace a plastic cup lid and eliminate the need of using one-time straws to reduce plastic usage, thereby contributing greatly to environmental protection. In fact, each composite sealing film of the present invention consumes only about 0.4-0.5g of plastics, much less than the 4-5g of plastics consumption of a traditional cup lid for hot drinks.

While the invention has been described by way of example and in terms of preferred embodiments, it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

In summation of the above description, the present invention herein enhances the performance over the conventional structure and further complies with the patent application requirements and is submitted to the Patent and Trademark Office for review and granting of the commensurate patent rights.

## Claims

1. A composite sealing film (100), which comprises:
a layer of base film (110) for being heat sealed onto a periphery of an opening (200a) of a beverage cup, the layer of base film (110) having a through hole (110b) at a position thereon for being adjacent to the periphery of the opening (200a) of the beverage cup, wherein the layer of base film (110) includes a stacked structure of a sealing layer and a surface layer, or a stacked structure of a sealing layer, a heat-insulating layer and a surface layer; and
a covering sheet (120), which is re-adherable by having an adhesive on a bottom surface (120b) thereof and has one end fastened to the layer of base film (110) on one side of the through hole (110b), whereby the covering sheet (120) can be repeatedly opened and adhered to the layer of base film (110) to enable a user to expose the through hole (110b) or close the through hole (110b) according to the user's need.

2. The composite sealing film (100) of claim 1, wherein the layer of base film (110) is printed with a pattern.

3. The composite sealing film (100) of claim 1, wherein the covering sheet (120) has an oblong shape.

4. The composite sealing film (100) of claim 1, wherein the covering sheet (120) has a triangular shape.

5. The composite sealing film (100) of claim 1, wherein the covering sheet (120) has a water-drop shape.

6. A beverage cup, which has a cup body (200) and a sealing film, and the sealing film is characterized to include:
a layer of base film (110) being heat sealed onto a periphery of an opening (200a) of the cup body (200), the layer of base film (110) having a through hole (110b) adjacent to the periphery of the opening (200a) of the cup body (200), wherein the layer of base film (110) includes a stacked structure of a sealing layer and a surface layer, or a stacked structure of a sealing layer, a heat-insulating layer and a surface layer; and
a covering sheet (120), which is re-adherable by having an adhesive on a bottom surface (120b) thereof and has one end fastened to the layer of base film (110) on one side of the through hole (110b), whereby the covering sheet (120) can be repeatedly opened and adhered to the layer of base film (110) to enable a user to expose the through hole (110b) or close the through hole (110b) according to the user's need.

7. The beverage cup of claim 6, wherein the layer of base film (110) is printed with a pattern.

8. The beverage cup of claim 6, wherein the covering sheet (120) has an oblong shape.

9. The beverage cup of claim 6, wherein the covering sheet (120) has a triangular shape.

10. The beverage cup of claim 6, wherein the covering sheet (120) has a water-drop shape.
